# EUROPEAN PATENT SPECIFICATION

(11) **EP 3 490 492 B1**
(45) Date of publication and mention of the grant of the patent: **17.11.2021**
(21) Application number: 17834866.0
(22) Date of filing: 14.07.2017
(51) Int. Cl.: A61C 8/00

(54) **FASTENING SYSTEM FOR FASTENING A DENTAL PROSTHESIS TO A DENTAL IMPLANT**
BEFESTIGUNGSSYSTEM ZUR BEFESTIGUNG EINER ZAHNPROTHESE AN EINEM ZAHNIMPLANTAT
SYSTÈME DE FIXATION POUR FIXER UNE PROTHÈSE DENTAIRE À UN IMPLANT DENTAIRE

(30) Priority: 26.07.2016 SE 1651086
(43) Date of publication of application: 05.06.2019
(73) Proprietor: BMC Dental AB, 218 32 Bunkeflostrand (SE)
(72) Inventor: LAURIDSEN, Christian, 6760 Ribe (DK)
(74) Representative: AWA Sweden AB
(86) International application number: PCT/SE2017/050781
(87) International publication number: WO 2018/021955

(56) References cited:
- EP-A1- 1 021 999
- EP-A1- 2 647 347
- WO-A1-2012/156459
- WO-A1-2015/152815
- DE-U1- 9 419 508
- DE-U1-202014 005 641

## Description

### Field of invention

The inventions relates to a fastening system for fastening a dental prosthesis to a dental implant having a ball shaped portion.

### Technical Background

Implant systems of today attempt to restore the patient to normal function, comfort, aesthetic, speech and health regardless of the current oral condition. These implant systems are based on the implantation of dental implants, such as dental implants made of biocompatible titanium or any other dental material, through insertion into the patient's jawbone. There are many methods to attach a dental superstructure or prosthesis to an implant, where one example is the use of dental cement. Other examples are methods that are based on the use of a screw means, where these screw members can attach the superstructure to the implant, either directly or via spacers.

When a patient has been without tooth/teeth for a period of time, the jawbone starts to degenerate, since the jawbone is not under strain from masticatory forces. This results in less bone material for the proper anchoring of a dental implant. To find enough bone for optimal implantation, the dental implant sometimes has to be angled so that the longitudinal axis of the dental implant projects out of the mouth.

Fixing a superstructure with dental cement is complicated due to various factors such as varied drying time of the cement, difficulties in fixating the superstructure while the dental cement is drying, and problems related to adjusting a dental superstructure once the dental cement has dried. If a screw means is used, it necessitates that the mouth of the screw channel is placed on a visible surface of the dental superstructure or prosthesis.

WO2010/036197 A1 discloses a superstructure for a dental implant. The superstructure comprises a fastening portion with a joint socket in form of a spherically shaped cavity with a fastening surface, and a main portion. This superstructure is intended to be joined to an osseointegrated dental implant via the fastening portion. The main portion comprises a screw hole partly forming an opening in the fastening surface, such that there is a perpendicularly distance between the center of the spherical cavity and the central axis of the screw hole. A screw in the screw hole may be used to clamp a spherical member of the dental implant in the cavity.

WO2015/152815 discloses a fastening system for a dental implant comprising a ball shaped portion, wherein the fastening system comprises a body having a seat forming a cavity. The fastening system is characterized in that the body comprises at least two parts together forming the seat. The parts are arranged such that the seat can engage around the ball shaped portion of the dental implant and in that the seat is movable between a first position in which the parts are allowed to move relative each other, and a second position in which the parts are prevented from moving relative each other, thereby lockingly engaging the ball shaped portion of the dental implant.

When designing the above referenced kinds of dental implants and dental prosthesis there are a number of design criteria to consider. It should be able to provide sufficiently strong fixation of the prosthesis. It should be easy for the dentist to correctly position the prosthesis in the patient's mouth. It should be flexible in the sense that it is useful for many different patients with varying appearance and conditions. The above referenced fastening systems address these design criteria. Other fastenings systems addressing these design criteria will be discussed below. Another design criterion is that it should be easy to manufacture.

WO2012/156459 discloses a fastening system in which the number of parts is reduced and a standard screw may used. The clamping element is formed of two parts being pivotably suspended inside a superstructure. The two parts are pushed apart by a standard screw at a distance from the pivot points and at another side of the pivot points the two parts will clamp the ball shaped member of the dental implant.

US5842864 discloses a similar system. The two clamping parts are pivotably suspended inside a dental prosthesis. The two clamping parts are urged from each other by a cam member thereby causing the other ends of the clamping parts to clamp around a ball shaped member of the dental implant.

KR101065924 also discloses a system where a screw is inserted from a side and is used to draw two portions of the clamping member towards each other.

EP2647347 discloses a complicated design where the dental implant is provided with a plurality of curved ribs and the superstructure or the dental prosthesis is provided with a dual system with a ball and a seat outside the ball. The curved ribs of the dental implant are clamped between the ball and the seat.

US 5,564,922 discloses a universal joint for dental abutment implant. The dental implant is provided with a seat adapted to receive a ball of a dental prosthesis. There is disclosed a number of different manners of fixing the ball to the seat by introducing a screw or a wedge from the side directly at the interface between the seat and the ball.

It may be noted that there is still room for improvements when it comes to finding a suitable balance between e.g. making the fastening system easy to use, easy to manufacture and assemble, and making it flexible allowing it to be used for many different patients.

### Summary of invention

It is an object of the invention to provide an improved fastenings system addressing at least some of the above mentioned issues concerning making the fastening system easy to use, easy to manufacture and assemble, and making it flexible allowing it to be used for many different patients.

This object has been achieved by a fastening system for fastening a dental prosthesis to a dental implant having a ball shaped portion, wherein the fastening system comprises
an external sleeve adapted to form part of or support a dental prosthesis, the external sleeve being provided with a bore extending along a bore axis through the external sleeve,
a manoeuvring member being received in a first portion of the bore and being rotatable in the bore about the bore axis,
a gripping member being received in a second portion of the bore, the gripping member being provided with a body portion and a seat portion, the seat portion having a seat adapted to grip around said ball shaped portion of said dental implant,
wherein the bore is provided with an radially inwardly extending shoulder portion adapted to interact with a radially outwardly extending shoulder portion of the manoeuvring member thereby preventing the manoeuvring member from moving in the bore from the first portion to the second portion,
wherein the manoeuvring member and the gripping member are provided with obliquely oriented mutually interacting surfaces such that rotation of the manoeuvring member causes the gripping member and the manoeuvring member to move relative to each other along the bore axis,
wherein the seat portion of the gripping member is provided with a circumferentially extending wall extending around the seat,
wherein the wall is provided with at least two slits, each slit having a transverse extension through the wall from an inner surface of the seat to an outer surface of the seat portion and each slit having a longitudinal extension with a major extension along the bore axis from a mouth portion of the seat towards the body portion,
wherein the slits divide the wall, as seen along the circumference of the wall, in at least two wall portions, which wall portions are interconnected via the body portion, thereby allowing the wall portions to resiliently flex towards each other when subjected to an inwardly directed force,
wherein the wall portions have outwardly facing abutment surfaces tapering towards the first portion of the bore,
wherein the second portion of the bore has an inwardly facing abutment surface being adapted to interact with the outwardly facing abutment surfaces of the wall portions, whereby rotation of the manoeuvring member is adapted to pull the gripping member towards the first portion of the bore such that said abutment surfaces interacts and forces the wall portions resiliently towards each other, the fastening system thereby being adapted to clamp onto said ball of said dental implant.

By designing the fastening system in this manner a number of advantages is achieved. The fastening system comprises a limited number of components. The components may be assembled into a single assembly at the manufacturing site and the dentist does not need to assemble it on site. The manoeuvring member is accessible along the bore axis which typically will provide easy access and visibility for the dentist using a screw driver to rotate the manoeuvring member. The combination of a wedge like action by the tapering abutment surfaces and the obliquely oriented mutually interacting surfaces makes it possible to provide a strong clamping force with relatively limited torque applied to the manoeuvring member.

By providing the wall with at least two slits in the manner disclosed above such that the wall portions resiliently flex towards each other when subjected to an inwardly directed force it is easy to press the seat onto the ball and then to change the angle between the dental implant and the external sleeve. It is easy to fine-tune the resistance against this angular movement by simply tighten the clamping force slightly by slightly rotating the manoeuvring member. If the resistance is too strong, it may equally easily be loosened due to the resilient nature of the wall portions. If the manoeuvring element is loosened the walls will move away from each other.

Preferred embodiments appear in the dependent claims and in the description.

Each slit may at its innermost end be provided with a locally widened portion being widened in a widening direction being transverse to the transverse and longitudinal extension of the slits. This increases the resilient flexibility of the wall portions, which allows for a compact design.

Each slit may extend in its longitudinal extension towards the body portion past a bottom surface of the seat. This will allow the wall to resiliently flex with a minimum of distortion of the shape of the seat, thereby allowing a strong clamping force to be achieved and allowing fine-tuning of the resistance against angular movement also at different angles during fitting of the dental prosthesis.

The widened portion of each slit may be positioned at the bottom surface of the seat such that it extends partly within a geometrical, preferably spherical, volume of the seat and partly outside the geometrical, preferably spherical, volume of the seat. This allows for a compact design with efficient resilient flexing of the wall portions. It may be noted that the widened portion forms a groove extending at the inner most surface of the seat from one of the slits to the other one of the slits. The groove will thereby extend outside the geometrical spherical volume of the seat.

The inwardly facing abutment portion of the second portion of the bore may taper inwardly towards the first portion. This allows for a secure clamping between the gripping member and the external sleeve.

The abutment surfaces of the wall portions may taper with a first inclination and the abutment portion of the second portion of the bore may taper with a second inclination, wherein the first inclination may be greater than the second inclination. This will allow for a secure clamping between the gripping member and the external sleeve and still reducing the frictional force counteracting the withdrawal of the gripping member into the bore of the external sleeve. It will also reduce the need for tight tolerances.

The walls may have, as seen in a radial direction, outside of the maximum diameter of the seat, a material thickness being from 5% to 25% compared to the maximum diameter of the seat. This will provide a suitable resilience during fitting and still allows the walls to forcefully clamp the ball of the dental implant once the fitting is finalised.

Each slit may have a width across the transverse and longitudinal extension being from 1% to 5% compared to the maximum diameter of the seat. This will provide a suitable resilience during fitting and still allows the walls to forcefully clamp the ball of the dental implant once the fitting is finalised.

The widened portion may have a maximum width being from 5% to 25% compared to the maximum diameter of the seat. This will provide a suitable resilience during fitting and still allows the walls to forcefully clamp the ball of the dental implant once the fitting is finalised.

The widened portion may have a circular cross-section as seen in the transverse extension of the slit. This will provide a suitable resilience during fitting and still allows the walls to forcefully clamp the ball of the dental implant once the fitting is finalised. It also reduces the risk of any cracks propagating from the ends of the slits.

The wall extending around the seat and at least a portion of the body portion being closest to the wall may be uniformly formed of a single piece of metallic material, wherein the slits may be formed by removing material from the walls. This is a simple and robust manner of providing the desired resilience.

The wall extending around the seat and at least a portion of the body portion being closest to the wall may be uniformly formed of a single piece of metallic material having a modulus of elasticity between 100-200GPa. By choosing materials within this range of modulus of elasticity (Young's modulus) the desired resiliency may be provided to facilitate fitting and a strong clamping force may be achieved once fitting is finalised. The design of the fastening system allows to provide the desired resiliency when using titanium based alloys having modulus of elasticity of about 100-130GPa. The design of the fastening system allows e.g. the use of titanium grade 5 having a modulus of elasticity of about 114GPa.

The seat may have a mouth having a diameter from 90% to 97% compared to the maximum diameter of the seat. This allows for relatively easy initial installation of the seat onto the ball and still it allows for significant angular adjustment during fitting. It also allows for strong clamping forces even at significant angular adjustments.

In short the fastening system may be said to be a fastening system for fastening a dental prosthesis to a dental implant having a ball shaped portion, wherein the fastening system comprises
an external sleeve, a manoeuvring member and a gripping member,
wherein the seat portion of the gripping member is provided with a circumferentially extending wall extending around the seat,
wherein the wall is provided with at least two slits, each slit having a transverse extension through the wall from an inner surface of the seat to an outer surface of the seat portion and each slit having a longitudinal extension with a major extension along the bore axis from a mouth portion of the seat towards the body portion,
wherein the slits divide the wall, as seen along the circumference of the wall, in at least two wall portions, which wall portions are interconnected via the body portion, thereby allowing the wall portions to resiliently flex towards each other when subjected to an inwardly directed force.

### Brief description of the drawings

The fastening system will by way of example be described in more detail with reference to the appended schematic drawings, which shows a presently preferred embodiment of the fastening system.
Figure 1 is an exploded view of the fastening system.
Figures 2a-d disclose an external sleeve.
Figures 3a-c disclose a manoeuvring member.
Figures 4a-d disclose a gripping member.

### Detailed description of preferred embodiments

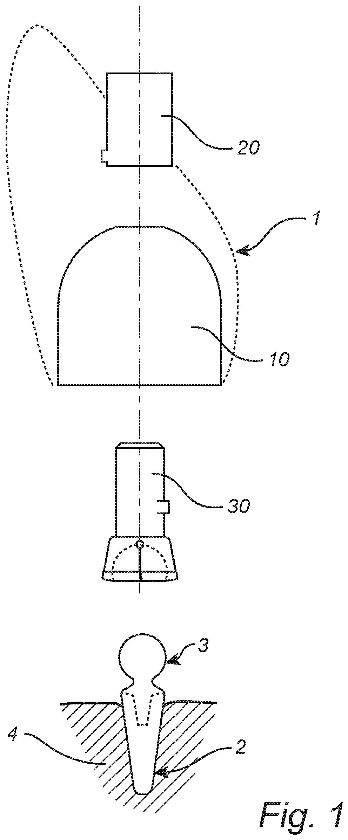

As indicated in figure 1, the fastening system is adapted to fasten a dental prosthesis 1 (indicated by the dashed line) to a dental implant 2 having a ball shaped portion 3. The fastening system comprises an external sleeve 10, a manoeuvring member 20 and a gripping member 30. The dental implant 2 may be made of biocompatible titanium or any other dental material. The dental implant 2 is adapted to be inserted into the patient's jawbone 4. The dental implant 2 may be attached to the jawbone 4 e.g. by being provided with threads and thereby be screwed into the jawbone 4. The dental implant 2 may be a single piece member or may be formed of more than one member. It may e.g. be formed of a first externally threaded member, which is first screwed in the jawbone 4, and a second ball carrying member, which is attached to the first member thereafter. The second member may e.g. be screwed into a threaded internal bore of the first member as indicated by the dashed line inside the dental implant 2.

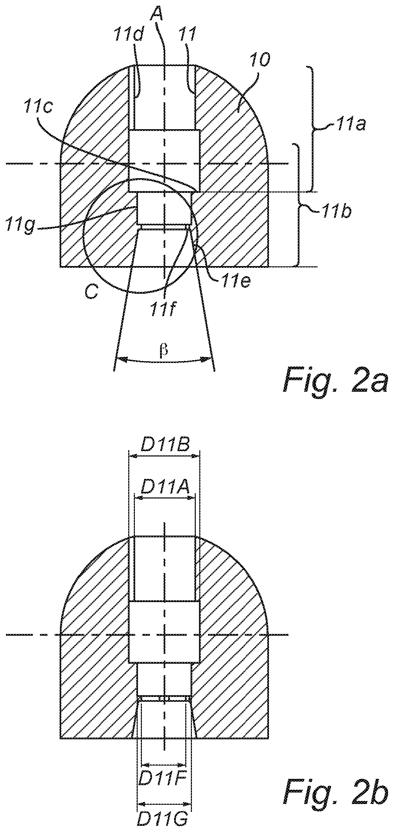

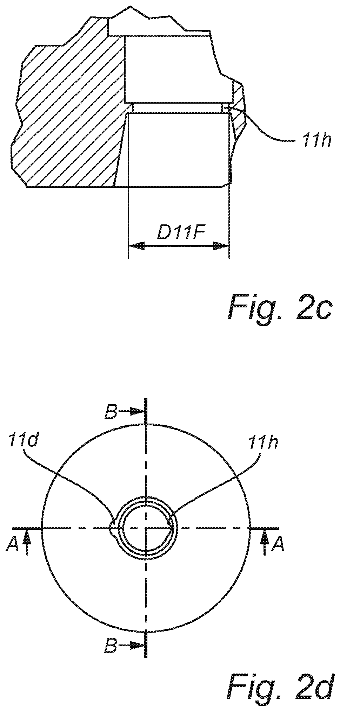

The external sleeve 10 is adapted to form part of or support a dental prosthesis 1 and is disclosed in more details in figures 2a-d. The external sleeve 10 is provided with a bore 11 extending along a bore axis A through the external sleeve 10. The bore 11 may be said to have a first portion 11a and a second portion 11b. The manoeuvring member 20 is received in the first portion 11a and the gripping member 30 is received in the second portion 11b. As will be apparent from the description below, the first portion 11a will extend from one end of the bore 11 towards the second portion 11b and the second portion 11b will extend from the other end of the bore 11 towards the first portion 11a. Since the gripping member 30 and the manoeuvring member 20 will co-extend along a central portion of the bore 11 it may be said that there is a central overlap between the first and the second portions 11a, 11b of the bore 11.

The first portion 11a of the bore 11 is essentially cylindrical and has a diameter D_{11A}. The manoeuvring member 20 is also essentially cylindrical and has an outer envelope surface 20a with an outer diameter D₂₀. The outer diameter D₂₀ of the manoeuvring member 20 is slightly smaller than the diameter D_{11A} of the bore 11. Thereby the manoeuvring member 11 may be received in the first portion 11a of the bore 11 and may be rotatable in the bore 11 about the bore axis A.

The bore 11 is provided with an radially inwardly extending shoulder portion 11c adapted to interact with a radially outwardly extending shoulder portion 20c of the manoeuvring member 20 thereby preventing the manoeuvring member 20 from moving in the bore 11 from the first portion 11a to the second portion 11b.

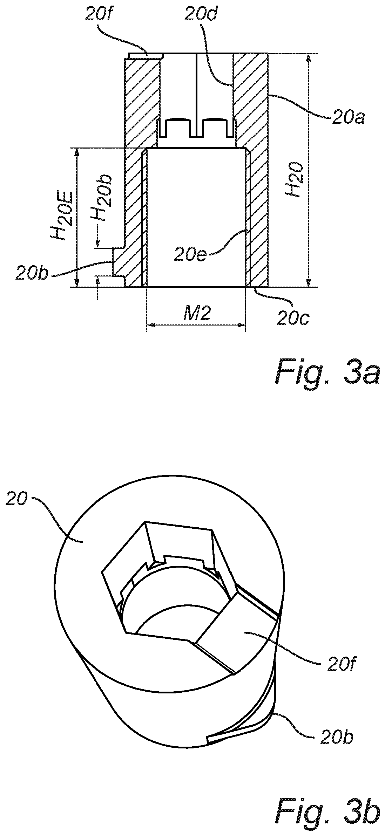

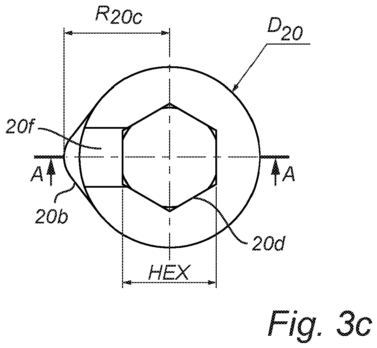

In order to minimise the risk that the manoeuvring member 20 is accidentally removed from the bore 11, the manoeuvring member 20 may be provided with a small protrusion 20b and the second portion 11b of the bore 11b may have an inner diameter D11B allowing the protrusion 20b to sweep around the bore axis A as the manoeuvring member 20 is rotated about the bore axis A. The maximum radius R_{20C} provided by the protrusion 20b is too large for the protrusion 20b to pass the first portion 11a. As is shown in figure 3a, the protrusion 20b is located close to the inner end of the manoeuvring member 20 and has an extension H_{20b} along the bore axis A being significantly smaller than the height H₂₀ of the manoeuvring member 20. To allow the manoeuvring member 20 to be inserted into the bore 11, the inner envelope surface of the first portion 11a is provided with a groove 11d allowing the protrusion 20b to pass the first portion 11a and to enter into the second portion 11b. Since the rotational position of the protrusion 20b is not visible to the user once it has been inserted into the bore 11 it is beneficial to indicate the position of the protrusion 20b e.g. by providing a depression 20f acting as a marker in line with the protrusion 20b.

The manoeuvring member 20 is also provided with a first manoeuvring portion 20d adapted to interact with a tool by which the user may manoeuvre the manoeuvring member 20. In the preferred embodiment, the manoeuvring portion 20d is a hexagonally shaped cavity adapted to interact with a so-called hex key.

The manoeuvring member 20 is also provided with a second manoeuvring portion 20e adapted to interact with the gripping member 30. In the preferred embodiment, the second manoeuvring portion 20e comprises an internally threaded cylindrical cavity forming an M2 nut.

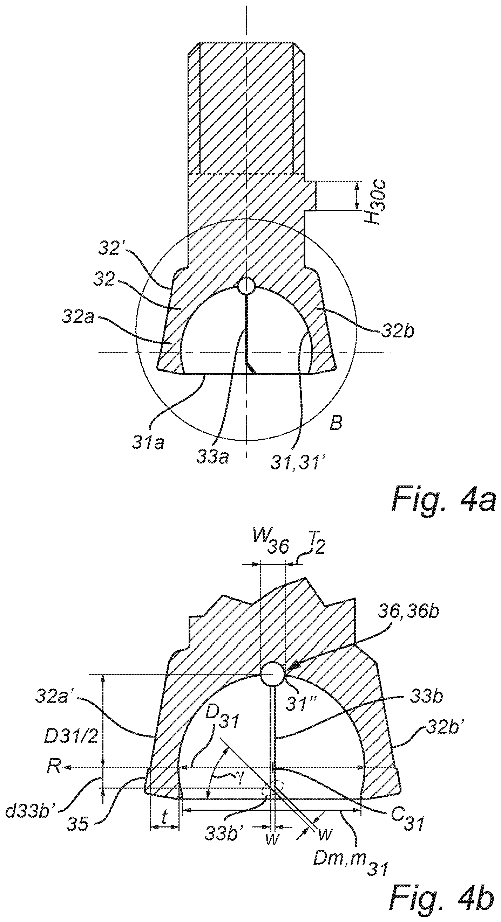

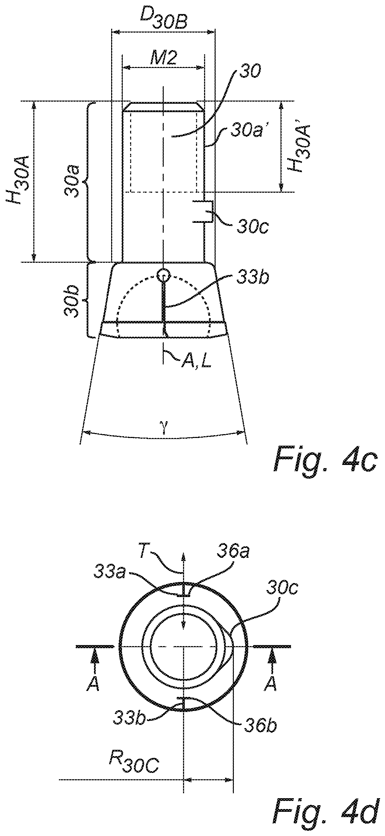

The gripping member 30 is as shown in the figures adapted to be received in the second portion 11b of the bore 11. The gripping member 30 is as shown in figures 4a-d provided with a body portion 30a and a seat portion 30b.The body portion 30a comprises an externally threaded cylindrical portion 30a' having a height H_{30A'} and forming an M2 bolt adapted to be threaded into the second manoeuvring portion 20e of the manoeuvring member 20.

As shown in figures 2a-d, the second portion 11b of the bore 11 adapted to receive the gripping member 30 is provided with an outer frusto-conical portion 11e, followed by a reduced diameter neck portion 11f in turn followed by a wider inner portion 11g.

The gripping member 30 is provided with a small protrusion 30c. The protrusion 30c is located between the threaded portion 30a' and the seat portion 30b. The protrusion 30c has a height H_{30C} being significantly smaller than the height H_{30A} of the body portion 30a and a limited circumferential extension (shown in figure 4d)

The wider inner portion 11g has an internal diameter D11G allowing the protrusion 30c to sweep around. The neck portion 11f has an internal diameter D_{11F} preventing the protrusion 30c from passing the neck portion 11f unless the protrusion 30c coincides with a groove 11h extending along the bore axis A similarly to the way the groove 11d extends the outer portion of the first portion 11a of the bore 11.

As shown in figures 4a-d, the seat portion 30b of the gripping member 30 has a seat 31 adapted to grip around the ball shaped portion 3 of the dental implant 2. The seat portion 30b is provided with a circumferentially extending wall 32 extending around the seat 31.

The wall 32 is provided with at least two slits 33a, 33b. Each slit 33a, 33b has a transverse extension T through the wall 32 from an inner surface 31' of the seat 31 to an outer surface 32' of the seat portion 30b and each slit 33a, 33b having a longitudinal extension L with a major extension along the bore axis A from a mouth portion 31a of the seat 31 towards the body portion 30a.

The two slits 33a-b divide the wall 32, as seen along the circumference of the wall 32, in two wall portions 32a-b. The wall portions 32a-b are interconnected via the body portion 30a, thereby allowing the allowing the wall portions 32a-b to resiliently flex towards each other when subjected to an inwardly directed force.

The wall portions 32a-b have outwardly facing abutment surfaces 32a', 32b' tapering towards the first portion 11a of the bore 11.

The second portion 11b of the bore 11 has an inwardly facing abutment surface 11e being adapted to interact with the outwardly facing abutment surfaces 32a', 32b' of the wall portions 32a-b, whereby rotation of the manoeuvring member 20 is adapted to pull the gripping member 30 towards the first portion 11a of the bore 11 such that said abutment surfaces 32a', 32b', 11e interacts and forces the wall portions 32a-b resiliently towards each other, the fastening system thereby being adapted to clamp onto the ball 3 of the dental implant 2. The inwardly facing abutment portion 11e of the second portion 11b of the bore 11 tapers inwardly towards the first portion 11a. The abutment surfaces 32a', 32b' of the wall portions 32a-b taper with a first inclination α and the abutment portion 11f of the second portion 11b of the bore 11 tapers with a second inclination β, wherein the first inclination α is greater than the second inclination β. In practice the gripping member 30 may have a conical portion with an angle α being about 20° whereas the corresponding angle β of the portion 11f of the bore 11 is about 19,5°.

In the preferred embodiment, the abutments surfaces 32a', 32b' are provided with a rim 35 extending around the wall 32. The rim 35 is located at the distal end of the wall 32 relative to the body portion 30a of the gripping member 30. The rim 35 extends radially outwardly relative to the remaining portions of the abutment surfaces 32a', 32b'. The diameter D_{30B} of the tapering portion 30b of the gripping member 30 and the diameter D_{11F} of the tapering portion 11f of the bore 11 are chosen such that the rim 35 will enter into contact with the tapering portion 11f of the bore 11. Since the tapering portion 30b of the gripping member 30 tapers with a greater inclination than the tapering portion 11f of the bore 11, the rim 35 will contact the inside of the tapering portion 11f of the bore 11 as long as the tapering portion 11f has an extension along the bore axis A sufficient to receive the tapering portion 30b until the rim 35 enters into contact with the tapering portion 11f of the bore 11.

As is shown in figures 4a-d, each slit 33a-b is at its innermost end provided with a locally widened portion 36a. 36b being widened in a widening direction T₂ being transverse to the transverse T and longitudinal L extension of the slits 33a, 33b.

Each slit 33a, 33b extend in its longitudinal extension L towards the body portion 30a past a bottom surface 31" of the seat 31.

The widened portion 36a-b of each slit 33a, 33b is, as seen along the bore axis, positioned at the bottom surface 31" of the seat 31 such that the widened portion 36 extends partly within a geometrical, preferably spherical, volume of the seat 31 and partly outside the geometrical, preferably spherical, volume of the seat 31. In figure 4b it is shown that the widened portion 36 has a circular cross-section as seen in the transverse extension T of the slit 33a, 33b. In the preferred embodiment the widened portions 36a, 36b basically forms a cylindrical bore 36 extending along the transverse direction T all the way through the gripping member 31.

The walls 32a, 32b have, as seen in a radial direction, outside of the maximum diameter D₃₁ of the seat 31, a material thickness t being from 5% to 25% compared to the maximum diameter D₃₁ of the seat 31. The seat 31 has a spherical shape with a diameter D₃₁. The bore 36 has its centre point at a latitude (height along the bore axis A) being half the diameter D₃₁ from the centre point C₃₁ of the seat 31. The maximum diameter D₃₁ along the radial direction R crosses the centre point C₃₁. At other latitudes, the diameter measured parallel to the radial direction R will be smaller.

Each slit 33a, 33b have a width w across the transverse T and longitudinal L extension being from 1% to 5% compared to the maximum diameter D₃₁ of the seat 31. In the preferred embodiment, the slits 33a, 33b have a width w being about 0,05mm. In the preferred embodiment, the diameter D₃₁ of the spherical seat 31 is about 2,25mm.

The widened portion 36a, 36b have a maximum width W36 being from 5% to 25% compared to the maximum diameter D₃₁ of the seat 31. In the preferred embodiment, the portion 36 have a diameter of about 0,3mm.

The wall 32 extending around the seat 31 and at least a portion of the body portion 30a being closest to the wall 32 is uniformly formed of a single piece of metallic material. The slits 33a, 33b are e.g. formed by removing material from the walls 32. In the preferred embodiment the complete gripping member 30 is formed of a single piece of metallic material.

The wall 32 extending around the seat 31 and at least a portion of the body portion 30a being closest to the wall 31 is uniformly formed of a single piece of metallic material having a modulus of elasticity between 100-200GPa. As mentioned above, in the preferred embodiment the complete gripping member 30 is formed of a single piece of metallic material, preferably titanium based alloy, most preferably titanium grade 5. Suitable titanium based alloys have typically a modulus of elasticity of about 100-130GPa. In the preferred embodiment, the fastening system is formed of titanium grade 5 having a modulus of elasticity of about 114GPa.

The seat 31 has a mouth having a diameter Dₘ from 90% to 97% compared to the maximum diameter D₃₁ of the seat 31.

As is shown e.g. in figure 4b, the slots 33a, 33b are provided with an entrance portion 33a', 33b' being closest to the mouth of the seat 31 and extending at an angle γ, preferably of about 45°, relative to the bore axis A. As shown in figure 4b, the entrance portion 33a', 33b' connects to the main portion of the slit 33a, 33b extending along the bore axis A at an altitude between the mouth of the seat 31 and the centre point C₃₁ of the seat 31 at a distance d_{33b'} from the centre point C₃₁, this distance d_{33b'} being about or preferably slightly larger than half the distance from the centre point C₃₁ to the mouth of the seat 31. The entrance portion 33b', 33a'b of respective slit has preferably the same width w as the other portions of respective slit 33a, 33b.

It is contemplated that there are numerous modifications of the embodiments described herein, which are still within the scope of the invention as defined by the appended claims.

The manoeuvring member and the gripping member may e.g. be instead of being provided with threads by provided with other kinds of obliquely oriented mutually interacting surfaces securing that rotation of the manoeuvring member causes the gripping member and the manoeuvring member to move relative to each other along the bore axis. Such obliquely oriented mutually interacting surfaces may e.g. be a pin in one of the members following an obliquely oriented circumferentially extending groove or slot in the other member (similarly to a so-called bayonet mount).

## Claims

1. Fastening system for fastening a dental prosthesis (1) to a dental implant (2) having a ball shaped portion (3), wherein the fastening system comprises
an external sleeve (10) adapted to form part of or support a dental prosthesis (1), the external sleeve (10) being provided with a bore (11) extending along a bore axis (A) through the external sleeve (10),
a manoeuvring member (20) being received in a first portion (11a) of the bore (11) and being rotatable in the bore (11) about the bore axis (A),
a gripping member (30) being received in a second portion (11b) of the bore (11), the gripping member (30) being provided with a body portion (30a) and a seat portion (30b), the seat portion (30b) having a seat (31) adapted to grip around said ball shaped portion (3) of said dental implant (2), wherein the bore (11) is provided with a radially inwardly extending shoulder portion (11c) adapted to interact with a radially outwardly extending shoulder portion (20c) of the manoeuvring member (20) thereby preventing the manoeuvring member (20) from moving in the bore (11) from the first portion (11a) to the second portion (11b),
wherein the manoeuvring member (20) and the gripping member (30) are provided with obliquely oriented mutually interacting surfaces (20e, 30a') such that rotation of the manoeuvring member causes the gripping member (30) and the manoeuvring member (20) to move relative to each other along the bore axis (A), **characterised in that** the seat portion (30b) of the gripping member (30) is provided with a circumferentially extending wall (32) extending around the seat (31),
wherein the wall (32) is provided with at least two slits (33a, 33b), each slit (33a, 33b) having a transverse extension (T) through the wall (32) from an inner surface (31') of the seat (31) to an outer surface (32') of the seat portion (31) and each slit (33a, 33b) having a longitudinal extension (L) with a major extension along the bore axis (A) from a mouth portion (m₃₁) of the seat (31) towards the body portion (30a),
wherein the slits (33a, 33b) divide the wall (32), as seen along the circumference of the wall (32), in at least two wall portions (32a, 32b), which wall portions (32a, 32b) are interconnected via the body portion (30a), thereby allowing the wall portions (32a, 32b) to resiliently flex towards each other when subjected to an inwardly directed force,
wherein the wall portions (32) have outwardly facing abutment surfaces (32a', 32b') tapering towards the first portion (11a) of the bore (11),
wherein the second portion (11b) of the bore (11) has an inwardly facing abutment surface (11e) being adapted to interact with the outwardly facing abutment surfaces (32a', 32b) of the wall portions (32a, 32b), whereby rotation of the manoeuvring member (20) is adapted to pull the gripping member (30) towards the first portion (11a) of the bore (11) such that said abutment surfaces (32a', 32b') interacts and forces the wall portions (32a, 32b) resiliently towards each other, the fastening system thereby being adapted to clamp onto said ball (3) of said dental implant (2).

2. Fastening system according to claim 1, wherein each slit (33a, 33b) at its innermost end is provided with a locally widened portion (36a, 36b) being widened in a widening direction (T₂) being transverse to the transverse (T) and longitudinal (L) extension of the slits (33a, 33b).

3. Fastening system according to claim 1 or 2, wherein each slit (33a, 33b) extends in its longitudinal extension (L) towards the body portion (30a) past a bottom surface (31") of the seat (31).

4. Fastening system according to claim 3 when dependent upon claim 2, wherein the widened portion (36a, 36b) of each slit (33a, 33b) is positioned at the bottom surface (31") of the seat (31) such that it extends partly within a geometrical volume of the seat (31) and partly outside the geometrical volume of the seat (31).

5. Fastening system according to any one of claims 1-4, wherein the inwardly facing abutment portion (11e) of the second portion (11b) of the bore (11) tapers inwardly towards the first portion (11a).

6. Fastening system according to claim 5, wherein the abutment surfaces (32a', 32b') of the wall portions (32a, 32b) taper with a first inclination (α) and the abutment portion (11e) of the second portion (11b) of the bore (11) tapers with a second inclination (β), wherein the first inclination (α) is greater than the second inclination (β).

7. Fastening system according to any one of claims 1-6, wherein the wall portions (32a, 32b) have, as seen in a radial direction (R), outside of a maximum diameter (D₃₁) of the seat (31), a material thickness (t) being from 5% to 25% compared to the maximum diameter (D₃₁) of the seat (31).

8. Fastening system according to any one of claims 1-7, wherein each slit (33a, 33b) has a width (w) across the transverse (T) and longitudinal (L) extension being from 1% to 5% compared to a maximum diameter (D₃₁) of the seat (31).

9. Fastening system according to any one of claims 3-8 when dependent upon claim 2, wherein the widened portion (36a, 36b) has a maximum width (w₃₆) being from 5% to 25% compared to the maximum diameter (D₃₁) of the seat (31).

10. Fastening system according to any one of claims 3-9 when dependent upon claim 2, wherein the widened portion (36a, 36b) has a circular cross-section as seen in the transverse extension (T) of the slit (31).

11. Fastening system according to any one of claims 1-10, wherein the wall (32) extending around the seat (31) and at least a portion of the body portion (30a) being closest to the wall (32) is uniformly formed of a single piece of metallic material, wherein the slits (33a, 33b) are formed by removing material from the wall (32).

12. Fastening system according to any one of claims 1-11, wherein the wall (32) extending around the seat (31) and at least a portion of the body portion (30a) being closest to the wall (32) is uniformly formed of a single piece of metallic material having a modulus of elasticity between 100-200GPa.

13. Fastening system according to any one of claims 1-12, wherein the seat (31) has a mouth portion (m₃₁) having a diameter (Dₘ) from 90% to 97% compared to the maximum diameter (D₃₁) of the seat (31).

## Patentansprüche

1. Befestigungssystem zur Befestigung einer Zahnprothese (1) an einem Zahnimplantat (2) mit einem kugelförmigen Abschnitt (3), wobei das Befestigungssystem umfasst
eine Außenhülse (10), die dazu angepasst ist, einen Teil einer Zahnprothese (1) zu bilden oder diese zu stützen, wobei die Außenhülse (10) mit einer Bohrung (11) versehen ist, die sich entlang einer Bohrungsachse (A) durch die Außenhülse (10) erstreckt,
ein Manövrierelement (20), das in einem ersten Abschnitt (11a) der Bohrung (11) aufgenommen ist und in der Bohrung (11) um die Bohrungsachse (A) drehbar ist,
ein Greifelement (30), das in einem zweiten Abschnitt (11b) der Bohrung (11) aufgenommen ist, wobei das Greifelement (30) mit einem Körperabschnitt (30a) und einem Sitzabschnitt (30b) versehen ist, wobei der Sitzabschnitt (30b) einen Sitz (31) aufweist, der dazu angepasst ist, den kugelförmigen Abschnitt (3) des Zahnimplantats (2) zu umgreifen, wobei
die Bohrung (11) mit einem sich radial einwärts erstreckenden Schulterabschnitt (11c) versehen ist, der dazu angepasst ist, mit einem sich radial nach außen erstreckenden Schulterabschnitt (20c) des Manövrierelements (20) zusammenzuwirken und dadurch zu verhindern, dass sich das Manövrierelement (20) in der Bohrung (11) von dem ersten Abschnitt (11a) zu dem zweiten Abschnitt (11b) bewegt,
wobei das Manövrierelement (20) und das Greifelement (30) mit schräg ausgerichteten miteinander zusammenwirkenden Oberflächen (20e, 30a') versehen sind, sodass die Drehung des Manövrierelements bewirkt, dass sich das Greifelement (30) und das Manövrierelement (20) bezogen aufeinander entlang der Bohrungsachse (A) bewegen, **dadurch gekennzeichnet, dass** der Sitzabschnitt (30b) des Greifelements (30) mit einer sich in Umfangsrichtung erstreckenden Wand (32) versehen ist, die sich um den Sitz (31) erstreckt,
wobei die Wand (32) mit mindestens zwei Schlitzen (33a, 33b) versehen ist, wobei jeder Schlitz (33a, 33b) eine Quererstreckung (T) durch die Wand (32) von einer Innenfläche (31') des Sitzes (31) zu einer Außenfläche (32') des Sitzabschnitts (31) aufweist und jeder Schlitz (33a, 33b) eine Längsachse (L) mit einer Haupterstreckung entlang der Bohrungsachse (A) von einem Mundabschnitt (m₃₁) des Sitzes (31) in Richtung des Körperabschnitts (30a) aufweist,
wobei die Schlitze (33a, 33b) die Wand (32), wie entlang des Umfangs der Wand (32) gesehen, in mindestens zwei Wandabschnitte (32a, 32b) teilen, wobei die Wandabschnitte (32a, 32b) mit dem Körperabschnitt (30a) verbunden sind, wodurch ermöglicht wird, dass sich die Wandabschnitte (32a, 32b) elastisch in Richtung zueinander beugen, wenn sie einer einwärts gerichteten Kraft unterliegen,
wobei die Wandabschnitte (32) nach außen gewandte Anschlagflächen (32a', 32b') aufweisen, die sich in Richtung des ersten Abschnitts (11a) der Bohrung (11) verjüngen,
wobei der zweite Abschnitt (11b) der Bohrung (11) eine einwärts gewandte Anschlagfläche (lle) aufweist, die dazu angepasst ist, mit den nach außen gewandten Anschlagflächen (32a', 32b) der Wandabschnitte (32a, 32b) zusammenzuwirken, wodurch die Drehung des Manövrierelements (20) dazu angepasst ist, das Greifelement (30) in Richtung des ersten Abschnitts (11a) der Bohrung (11) zu ziehen, sodass die Anschlagflächen (32a', 32b') zusammenwirken und die Wandabschnitte (32a, 32b) zwingen, sich elastisch aufeinander zu zu bewegen und dadurch das Befestigungssystem dazu angepasst ist, auf der Kugel (3) des Zahnimplantats (2) festzuklemmen.

2. Befestigungssystem nach Anspruch 1, wobei jeder Schlitz (33a, 33b) an seinem am weitesten innen liegenden Ende mit einem örtlich erweiterten Abschnitt (36a, 36b) versehen ist, der in eine Erweiterungsrichtung (T₂) erweitert ist, die quer zu der Quererstreckung (T) und der Längserstreckung (L) der Schlitze (33a, 33b) ist.

3. Befestigungssystem nach Anspruch 1 oder 2, wobei sich jeder Schlitz (33a, 33b) in seiner Längserstreckung (L) in Richtung des Körperabschnitts (30a) an einer Unterseite (31") des Sitzes (31) vorbei erstreckt.

4. Befestigungssystem nach Anspruch 3 in Abhängigkeit von Anspruch 2, wobei der erweiterte Abschnitt (36a, 36b) jedes Schlitzes (33a, 33b) an der Unterseite (31") des Sitzes (31) positioniert ist, sodass er sich teilweise in einem geometrischen Volumen des Sitzes (31) und teilweise außerhalb des geometrischen Volumens des Sitzes (31) erstreckt.

5. Befestigungssystem nach einem der Ansprüche 1-4, wobei sich der einwärts gewandte Anschlagabschnitt (lle) des zweiten Abschnitts (11b) der Bohrung (11) in Richtung des ersten Abschnitts (11a) nach innen verjüngt.

6. Befestigungssystem nach Anspruch 5, wobei sich die Anschlagflächen (32a', 32b') der Wandabschnitte (32a, 32b) mit einer ersten Neigung (α) verjüngen und sich der Anschlagabschnitt (lle) des zweiten Abschnitts (11b) der Bohrung (11) mit einer zweiten Neigung (β) verjüngt, wobei die erste Neigung (α) größer ist als die zweite Neigung (β).

7. Befestigungssystem nach einem der Ansprüche 1-6, wobei die Wandabschnitte (32a, 32b), wie in einer radialen Richtung (R) gesehen, außerhalb eines maximalen Durchmessers (D₃₁) des Sitzes (31) eine Materialdicke (t) aufweisen, die 5% bis 25% verglichen mit dem maximalen Durchmesser (D₃₁) des Sitzes (31) beträgt.

8. Befestigungssystem nach einem der Ansprüche 1-7, wobei jeder Schlitz (33a, 33b) eine Breite (w) über der Quererstreckung (T) und der Längserstreckung (L) aufweist, die 1% bis 5% verglichen mit einem maximalen Durchmesser (D₃₁) des Sitzes (31) beträgt.

9. Befestigungssystem nach einem der Ansprüche 3-8 in Abhängigkeit von Anspruch 2, wobei der erweiterte Abschnitt (36a, 36b) eine maximale Breite (w₃₆) aufweist, die 5% bis 25% verglichen mit dem maximalen Durchmesser (D₃₁) des Sitzes (31) beträgt.

10. Befestigungssystem nach einem der Ansprüche 3-9 in Abhängigkeit von Anspruch 2, wobei der erweiterte Abschnitt (36a, 36b) einen kreisförmigen Querschnitt aufweist, wie in der Quererstreckung (T) des Schlitzes (31) gesehen.

11. Befestigungssystem nach einem der Ansprüche 1-10, wobei sich die Wand (32) um den Sitz (31) herum erstreckt und mindestens ein Abschnitt des Körperabschnitts (30a), der der Wand (32) am nächsten ist, gleichmäßig als ein einzelnes Stück aus metallischem Material gebildet ist, wobei die Schlitze (33a, 33b) durch Entfernen von Material aus der Wand (32) gebildet sind.

12. Befestigungssystem nach einem der Ansprüche 1-11, wobei sich die Wand (32) um den Sitz (31) herum erstreckt und mindestens ein Abschnitt des Körperabschnitts (30a), der der Wand (32) am nächsten ist, gleichmäßig als ein einzelnes Stück aus metallischem Material gebildet ist, das einen Elastizitätsmodul von 100-200GPa aufweist.

13. Befestigungssystem nach einem der Ansprüche 1-12, wobei der Sitz (31) einen Mundabschnitt (m₃₁) aufweist, der einen Durchmesser (Dₘ) von 90% bis 97% verglichen mit dem maximalen Durchmesser (D₃₁) des Sitzes (31) aufweist.

## Revendications

1. Système de fixation destiné à fixer une prothèse dentaire (1) à un implant dentaire (2) ayant une partie en forme de bille (3), le système de fixation comprenant :
un manchon externe (10) adapté pour faire partie d'une prothèse dentaire (1) ou supporter ladite prothèse dentaire, le manchon externe (10) étant pourvu d'un alésage (11) s'étendant le long d'un axe d'alésage (A) à travers le manchon externe (10),
un élément de manœuvre (20) étant reçu dans une première partie (11a) de l'alésage (11) et pouvant tourner dans l'alésage (11) autour de l'axe d'alésage (A),
un élément de préhension (30) étant reçu dans une seconde partie (11b) de l'alésage (11), l'élément de préhension (30) étant pourvu d'une partie de corps (30a) et d'une partie de siège (30b), la partie de siège (30b) ayant un siège (31) adapté pour s'accrocher autour de ladite partie en forme de bille (3) dudit implant dentaire (2),
l'alésage (11) étant pourvu d'une partie d'épaulement s'étendant radialement vers l'intérieur (11c) adaptée pour interagir avec une partie d'épaulement s'étendant radialement vers l'extérieur (20c) de l'élément de manœuvre (20) empêchant ainsi l'élément de manœuvre (20) de se déplacer dans l'alésage (11) de la première partie (11a) à la seconde partie (11b),
l'élément de manœuvre (20) et l'élément de préhension (30) étant pourvus de surfaces d'interaction mutuelle orientées de manière oblique (20e, 30a') de sorte que la rotation de l'élément de manœuvre amène l'élément de préhension (30) et l'élément de manœuvre (20) à se déplacer l'un par rapport à l'autre le long de l'axe d'alésage (A),
**caractérisé en ce que**
la partie de siège (30b) de l'élément de préhension (30) est pourvue d'une paroi s'étendant circonférentiellement (32) qui s'étend autour du siège (31),
la paroi (32) étant pourvue d'au moins deux fentes (33a, 33b), chaque fente (33a, 33b) ayant une extension transversale (T) à travers la paroi (32) depuis une surface intérieure (31') du siège (31) jusqu'à une surface extérieure (32') de la partie de siège (31) et
chaque fente (33a, 33b) ayant une extension longitudinale (L) avec une extension majeure le long de l'axe d'alésage (A) depuis une partie d'embouchure (m₃₁) du siège (31) vers la partie de corps (30a),
les fentes (33a, 33b) divisant la paroi (32), comme on le voit le long de la circonférence de la paroi (32), en au moins deux parties de paroi (32a, 32b), lesquelles parties de paroi (32a, 32b) sont interconnectées par l'intermédiaire de la partie de corps (30a), permettant ainsi aux parties de paroi (32a, 32b) de fléchir élastiquement l'une vers l'autre lorsqu'elles sont soumises à une force dirigée vers l'intérieur,
les parties de paroi (32) ayant des surfaces de butée (32a', 32b') orientées vers l'extérieur qui s'effilent vers la première partie (11a) de l'alésage (11),
la seconde partie (11b) de l'alésage (11) ayant une surface de butée orientée vers l'intérieur (lle) étant adaptée pour interagir avec les surfaces de butée orientées vers l'extérieur (32a', 32b) des parties de paroi (32a, 32b), la rotation de l'élément de manœuvre (20) étant ainsi adaptée pour tirer l'élément de préhension (30) vers la première partie (11a) de l'alésage (11) de telle sorte que lesdites surfaces de butée (32a', 32b') interagissent et forcent les parties de paroi (32a, 32b) de manière élastique l'une vers l'autre, le système de fixation étant ainsi adapté pour se serrer sur ladite bille (3) dudit implant dentaire (2).

2. Système de fixation selon la revendication 1, chaque fente (33a, 33b) au niveau de son extrémité la plus interne étant pourvue d'une partie localement élargie (36a, 36b) qui est élargie dans une direction d'élargissement (T₂) qui est transversale à l'extension transversale (T) et longitudinale (L) des fentes (33a, 33b) .

3. Système de fixation selon la revendication 1 ou 2, chaque fente (33a, 33b) s'étendant dans son extension longitudinale (L) vers la partie de corps (30a) au-delà d'une surface inférieure (31") du siège (31).

4. Système de fixation selon la revendication 3 lorsque dépendante de la revendication 2, la partie élargie (36a, 36b) de chaque fente (33a, 33b) étant positionnée au niveau de la surface inférieure (31") du siège (31) de telle sorte qu'elle s'étend partiellement à l'intérieur d'un volume géométrique du siège (31) et partiellement à l'extérieur du volume géométrique du siège (31).

5. Système de fixation selon l'une quelconque des revendications 1 à 4, la partie de butée (lle) tournée vers l'intérieur, de la seconde partie (11b) de l'alésage (11) s'effilant vers l'intérieur en direction de la première partie (11a).

6. Système de fixation selon la revendication 5, les surfaces de butée (32a', 32b') des parties de paroi (32a, 32b) s'effilant avec une première inclinaison (a) et la partie de butée (lle) de la seconde partie (11b) de l'alésage (11) s'effilant avec une seconde inclinaison (β), la première inclinaison (a) étant supérieure à la seconde inclinaison (β).

7. Système de fixation selon l'une quelconque des revendications 1 à 6, les parties de paroi (32a, 32b) ayant, comme on le voit dans une direction radiale (R), à l'extérieur d'un diamètre maximum (D₃₁) du siège (31), une épaisseur de matière (t) qui est de 5 % à 25 % par rapport au diamètre maximum (D₃₁) du siège (31).

8. Système de fixation selon l'une quelconque des revendications 1 à 7, chaque fente (33a, 33b) ayant une largeur (w) à travers l'extension transversale (T) et longitudinale (L) qui est de 1 % à 5 % par rapport à un diamètre maximal (D₃₁) du siège (31) .

9. Système de fixation selon l'une quelconque des revendications 3 à 8 lorsque dépendantes de la revendication 2, la partie élargie (36a, 36b) ayant une largeur maximale (w₃₆) qui est de 5 % à 25 % par rapport au diamètre maximal (D₃₁) du siège (31) .

10. Système de fixation selon l'une quelconque des revendications 3 à 9 lorsque dépendantes de la revendication 2, la partie élargie (36a, 36b) ayant une section transversale circulaire comme on le voit dans l'extension transversale (T) de la fente (31).

11. Système de fixation selon l'une quelconque des revendications 1 à 10, la paroi (32) s'étendant autour du siège (31) et au moins une partie de la partie de corps (30a) qui est la plus proche de la paroi (32) étant uniformément formée d'une seule pièce de matière métallique, les fentes (33a, 33b) étant formées par enlèvement de matière de la paroi (32).

12. Système de fixation selon l'une quelconque des revendications 1 à 11, la paroi (32) s'étendant autour du siège (31) et au moins une partie de la partie de corps (30a) qui est la plus proche de la paroi (32) étant uniformément formée d'une seule pièce de matière métallique ayant un module d'élasticité entre 100-200 GPa.

13. Système de fixation selon l'une quelconque des revendications 1 à 12, le siège (31) ayant une partie d'embouchure (m₃₁) qui a un diamètre (Dₘ) de 90 % à 97 % par rapport au diamètre maximal (D₃₁) du siège (31).
